# EUROPEAN PATENT SPECIFICATION

(11) **EP 2 609 337 B1**
(45) Date of publication and mention of the grant of the patent: **20.01.2021**
(21) Application number: 11819232.7
(22) Date of filing: 24.08.2011
(51) Int. Cl.: F04D 29/58, F04D 13/06, F04D 29/40, F04D 29/42, H02K 5/128, H02K 5/20, H02K 11/33, B60K 11/02, H02K 7/14

(54) **ELECTRIC WATER PUMP WITH STATOR COOLING**
ELEKTRISCHE WASSERPUMPE MIT STATORKÜHLUNG
POMPE À EAU ÉLECTRIQUE AVEC REFROIDISSEMENT DE STATOR

(30) Priority: 25.08.2010 US 376740 P
(43) Date of publication of application: 03.07.2013
(73) Proprietor: Magna Powertrain FPC Limited Partnership, Aurora ON L4G 7K1 (CA)
(72) Inventor: MILLS, Kyle D., Etobicoke Ontario M9A 0A5 (CA); MAURINO, Paolo Lincoln, I-12031 Bagnolo Piemonte (IT)
(74) Representative: AWA Sweden AB
(86) International application number: PCT/CA2011/000961
(87) International publication number: WO 2012/024778

(56) References cited:
- EP-A2- 1 775 478
- EP-A2- 1 953 897
- WO-A1-2005/078900
- US-A- 5 997 261
- US-A- 5 997 261
- US-A1- 2001 033 800
- US-A1- 2007 210 655
- US-B1- 6 175 173
- US-B1- 6 300 693
- US-B1- 6 300 693

## Description

### FIELD

The present disclosure relates to a fluid pump. More particularly, an integrated motor, pump and controller assembly includes an internal coolant flow path to transfer heat from motor and the controller to the fluid being pumped.

### BACKGROUND

This section provides background information related to the present invention.

A variety of motor driven fluid pumps have been controlled with switches or electronics positioned remotely from the motor and pump combination. Relatively unwieldy packaging and wire routing concerns may exist regarding the installation and use of these devices.

Other electric motor and pump combinations have been configured to include a controller positioned within the same or an adjacent housing. Robust operation becomes a concern due to possible overheating of the electronic components within the controller. Known designs are relatively large, costly and complex. Fluid pumps are known in the art from e.g. US 5 997 261 and EP 1 953 897. Accordingly, a need in the art may exist to define a simplified, low cost, low weight electric motor, pump and controller combination.

### SUMMARY

This section only provides a general summary of the invention. The full scope of the invention is solely defined by an electric pump defined in claim 1. Further preferred specifications are defined in the dependent claims.

Among other features, the inventive electric pump includes an outer housing having a motor cavity and a controller cavity separated by a partition wall. An inner housing is positioned within the motor cavity of the outer housing. One of the inner and outer housings includes radially extending ribs positioned adjacent to the other of the inner and outer housing to define a coolant flow path between the inner and outer housings. An electric motor is positioned within the inner housing and includes a stator and a rotor, where the rotor is fixed to a solid rotor shaft for driving a pump member. A cylindrical sleeve separates the stator and the rotor. An area between the sleeve and the rotor forms a portion of the coolant path and interconnects a volume between the inner and outer housings with a low pressure zone of the impeller cavity containing the pump member. A controller is positioned within the controller cavity in heat transfer relation with the partition wall.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present invention.
Figure 1 is an exploded perspective view of an electric water pump with stator cooling constructed in accordance with the teachings of the present disclosure;
Figure 2 is a cross-sectional view of the electric water pump;
Figure 3 is a fragmentary cross-sectional view showing an inner housing being inserted within an outer housing;
Figure 4 is a fragmentary cross-sectional view of the outer housing of the electric water pump assembly;
Figure 5 is a schematic depicting a coolant flow path between the inner and outer housings;
Figure 6 is a partial fragmentary cross-sectional view of an alternate electric water pump assembly;
Figure 7 is a cross-sectional view taken through another alternate pump assembly, this pump assembly is according to the present invention;
Figure 8 is a fragmentary cross-sectional view taken along line 8-8 as shown in Figure 7;
Figure 9 is a partially exploded perspective view of the alternate pump;
Figure 10 is a fragmentary perspective view depicting a serpentine coolant path;
Figure 11 is a fragmentary cross-sectional view illustrating portions of the coolant path; and
Figure 12 is a fragmentary perspective view depicting passages extending through a pump impeller.

Corresponding reference numerals indicate corresponding parts throughout the several views of the drawings.

### DETAILED DESCRIPTION

Example embodiments will now be described more fully with reference to the accompanying drawings.

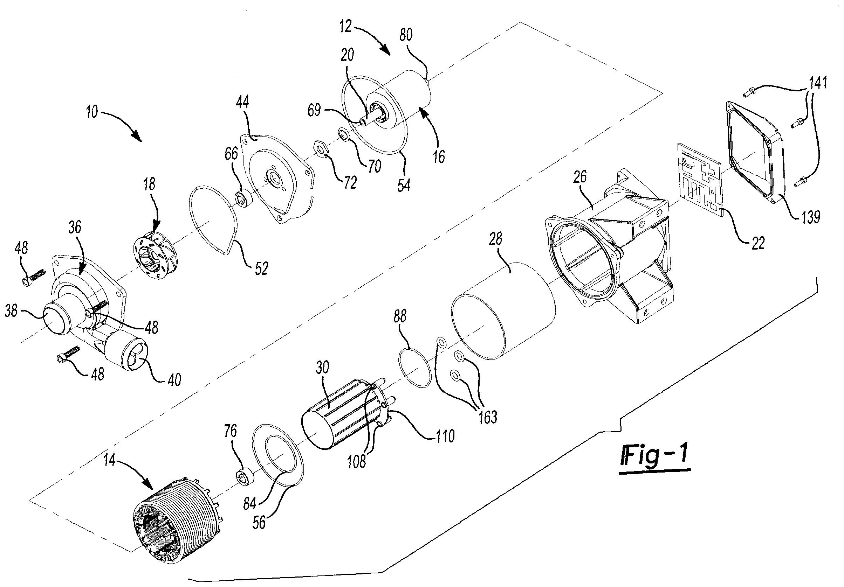

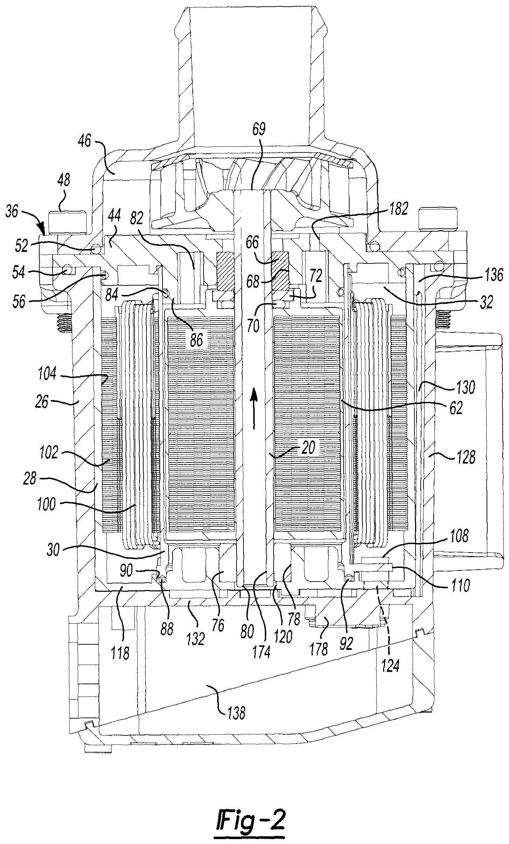

Figures 1 and 2 depict an electric water pump identified at reference numeral 10. Pump 10 includes an electric motor 12 including a stator assembly 14 and a rotor assembly 16. An impeller 18 is fixed for rotation with a rotor shaft 20 of rotor assembly 16. A controller 22 functions to control motor 12 and the rotational speed of impeller 18.

Pump 10 includes an outer housing 26 and an inner housing 28 arranged to allow fluid pumped by impeller 18 to pass between inner housing 28 and outer housing 26 to cool controller 22. A sleeve 30 is positioned to surround rotor assembly 16 and define a sealed stator cavity 32 in which stator assembly 14 is positioned. Fluid pumped by impeller 18 does not enter stator cavity 32 or contact stator assembly 14. A cap 36 includes an inlet 38 and an outlet 40. A mid-plate 44 cooperates with cap 36 to define an impeller cavity 46 where impeller 18 is rotatably positioned. Fasteners 48 couple cap 36 and mid-plate 44 to outer housing 26. First, second and third o-rings 52, 54 and 56 seal an interface between cap 36 and mid-plate 44, a joint between mid-plate 44 and outer housing 26, and an interface between mid-plate 44 and inner housing 28.

Rotor assembly 16 includes a plurality of permanent magnets (not shown) encapsulated by a shell 62. All of the rotor assembly components are fixed to rotor shaft 20. A first bushing 66 is positioned within a counterbore 68 formed in mid-plate 44 to support a first end 69 of rotor shaft 20 for rotation. An elastomeric member 70 and a plate 72 function to prevent shock loads being transferred to bushing 66. A second bushing 76 is positioned within a bore 78 of inner housing 28 to support a second end 80 of rotor shaft 20 for rotation.

Sleeve 30 sealingly engages mid-plate 44 and inner housing 28 to define stator cavity 32 as well as a rotor cavity 82. A first o-ring 84 is positioned between an inner circumferential surface of sleeve 30 and an outer circumferential surface of a boss 86 of mid-plate 44. Another o-ring 88 is positioned within a groove 90 formed within inner housing 28 to sealingly engage an end face 92 of sleeve 30. The overall length of sleeve 30 is defined to assure that a compressive load acts on o-ring 88 when cap 36 and mid-plate 44 are coupled to outer housing 26 via fasteners 48. This arrangement assures that pumped fluid does not enter stator cavity 32.

Stator assembly 14 includes a coil 100 and a plurality of plates 102 closely fitted to an inner cylindrical wall 104 of inner housing 28. Wires from coil 100 extend through apertures 108 formed in radially extending flanges 110 of sleeve 30.

Inner housing 28 includes a substantially cylindrically shaped wall 114 having an inner cylindrical surface 104 and an outer cylindrical surface 116. A bottom 118 closes one end of cylindrical wall 114. Mid-plate 44 closes the opposite end. A central aperture 120 extends through bottom 118 and is in receipt of one end of rotor shaft 20. Other apertures 124 are coaxially aligned with apertures 108 of sleeve 30 to allow wires from the windings to pass therethrough. It is contemplated that inner housing 28 is formed from a metal using a casting process.

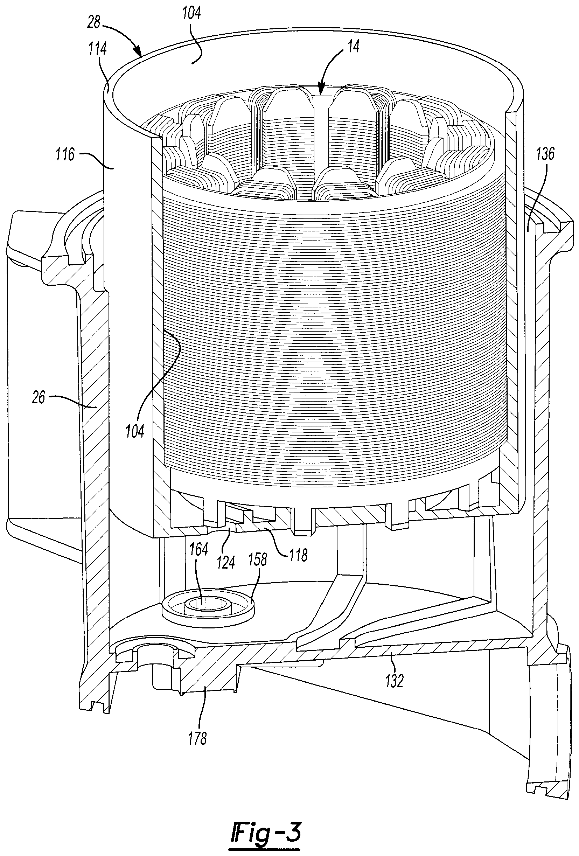

Outer housing 26 may also be a metal casting. Outer housing 26 includes a substantially cylindrically shaped wall 128 with a substantially cylindrical inner surface 130. A partition wall 132 caps cylindrical wall 128 and separates a cooling cavity 136 from a controller cavity 138. An end cap 139 is coupled to outer housing 26 with a plurality of fasteners 141 to define controller cavity 138. A plurality of radially inwardly extending ribs 140 define a coolant flow path 142 best shown in Figures 2-5.

Ribs 140a radially inwardly protrude from surface 130 and axially extend from an inner surface 144 of partition wall 132 to a mating surface 146 formed at the end of outer housing 26. Another set of inwardly protruding ribs, identified at reference numerals 140b, are shorter than ribs 140a, extend from surface 144 and terminate at ends 150 spaced apart from mating surface 146. The long (140a) and short (140b) ribs are positioned circumferentially spaced apart from one another in an alternating pattern to define a singular continuous and circuitous flow path 142. Ribs 140a and 140b also include radially extending and axially protruding portions extending above surface 144. The external features of inner housing 28, including outer surface 116 and bottom 118, are sized to mate with and be positioned substantially adjacent to the innermost surfaces of ribs 140a, 140b. As such, inner housing 28 cooperates with outer housing 26 to define fluid flow path 142. It should be appreciated that in an alternate configuration, some or all of ribs 140 may be formed on inner housing 28 instead of outer housing 26.

Outer housing 26 also includes passages 158, 160 and 162 shaped as concentric rings axially protruding from surface 144. O-ring seals 163 are positioned between the inner and outer concentric rings to sealingly engage bottom 118 of inner housing 28. Apertures 164, 166 and 168 extend through partition wall 132 to allow wires of stator assembly 14 to extend into controller cavity 138. Seals 163 function to restrict ingress of pumped fluid into stator cavity 32 and controller cavity 138.

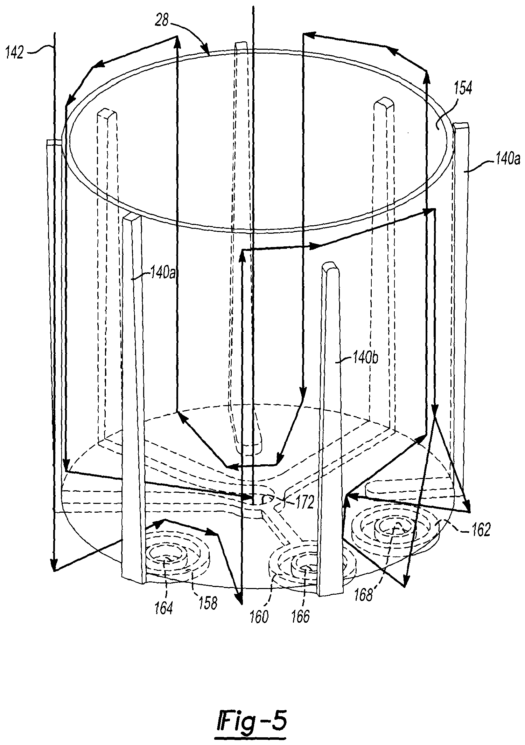

As best shown in Figure 5, pressurized fluid from impeller cavity 46 is in fluid communication with an aperture (not shown) extending through mid-plate 44 that is aligned with an inlet 154 of flow path 142. It should be appreciated that the aperture extending through mid-plate 44 is relatively small and acts as an orifice to reduce the flow of coolant through path 142. A majority of the fluid being pumped is drawn from inlet 38 across impeller 18 and exits at outlet 40.

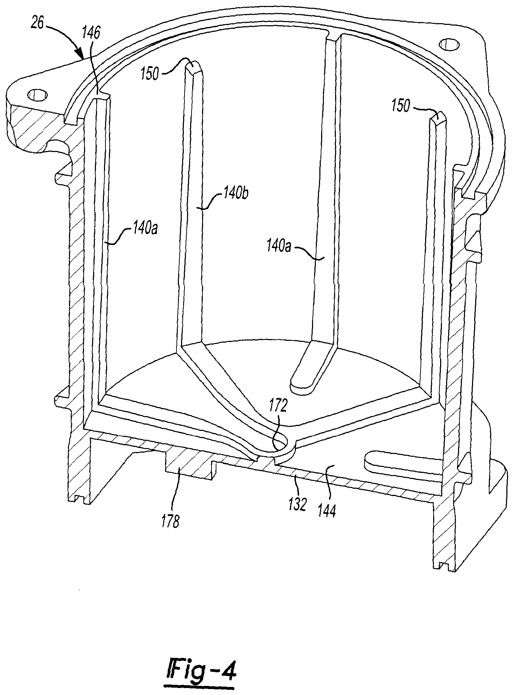

Coolant fluid flow path 142 provides pressurized fluid to inlet 154 and axially across inner surface 130. The fluid turns 90 degrees to flow across inner surface 144 and around passage 158. Path 142 turns 90 degrees once again to direct coolant flow axially across surface 130 in an opposite direction. Flow continues across cylindrical surface 130 and turns 180 degrees around end 150 of rib 140b and across mid-plate 44. This circuitous pattern is repeated until pressurized fluid reaches a blind recess 172 (Figure 4). Rotor shaft 20 is hollow and includes a bore 174 extending therethrough. Second end 80 of rotor shaft 20 is in communication with blind recess 172 such that pressurized fluid flows through bore 174 and returns to a low pressure zone of impeller cavity 46.

Controller 22 is mounted to a portion 178 of partition wall 132 having an increased thickness. The increased thickness portion acts as a heat sink for energy emitted by elements such as MOSFETs of controller 22. Fluid flow path 142 includes many portions of surface 144 being in direct contact with the pumped fluid. Heat is transferred from controller 22 to the fluid passing across partition 132.

Another flow path exists to lubricate bushings 66 and 76. As shown in Figure 2, second end 80 of rotor shaft 20 is spaced apart from partition wall 132 of outer housing 26 and inner housing 28 to allow fluid to pass between rotor shaft 20 and outer housing 26 as well as between an inner diameter of bushing 76 and an outer diameter of rotor shaft 20. Fluid then becomes positioned between rotor assembly 16 and sleeve 30. Fluid is also provided a path to exit rotor cavity 82 and travel between an inner diameter of bushing 66 and an outer surface of rotor shaft 20. An aperture 182 is optionally provided to provide a purge path for air that may become trapped within rotor cavity 82 during initial assembly. Aperture 182 may also function to allow pressurized fluid to travel through the secondary lubrication path and return to a low pressure zone of impeller cavity 46.

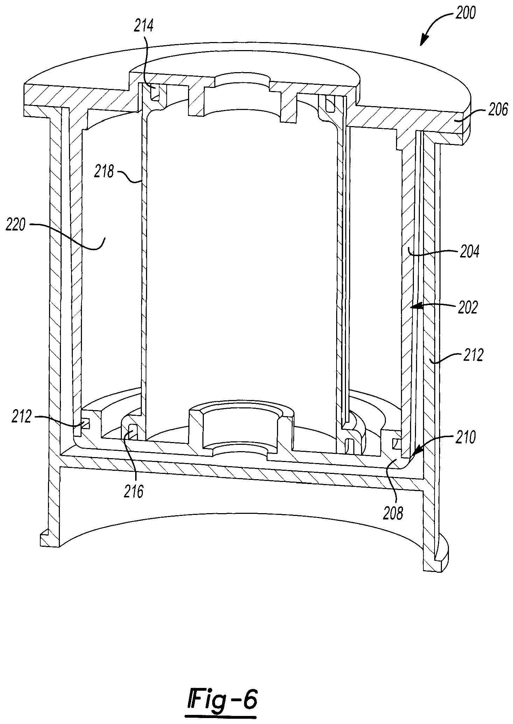

Figure 6 depicts portions of an alternate pump 200. Pump 200 includes an inner housing 202 including a cylindrical portion 204 integrally formed with a mid-plate portion 206. A cap 208 closes an open end 210 of cylindrical portion 204. Cap 208 may be constructed from a composite material such as PPA, PPS or a phenolic material. A piston ring seal 212 may be used to seal cap 208 to inner housing 202. PIP gaskets 214, 216 may be used on either end of a sleeve 218 to seal a stator cavity 220 from the pumped fluid. A simple 2-draw aluminum die-casting process may be used to form inner housing 202 as well as radially extending ribs that may be formed thereon. A 2-draw, 2-slide die-casting process is used to form an outer housing 222 including mounting points, a controller cavity and cooling flow paths.

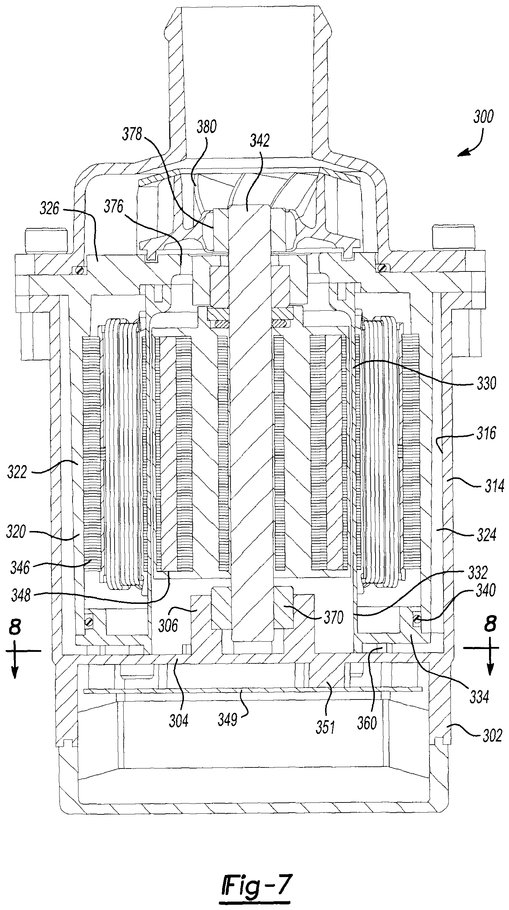

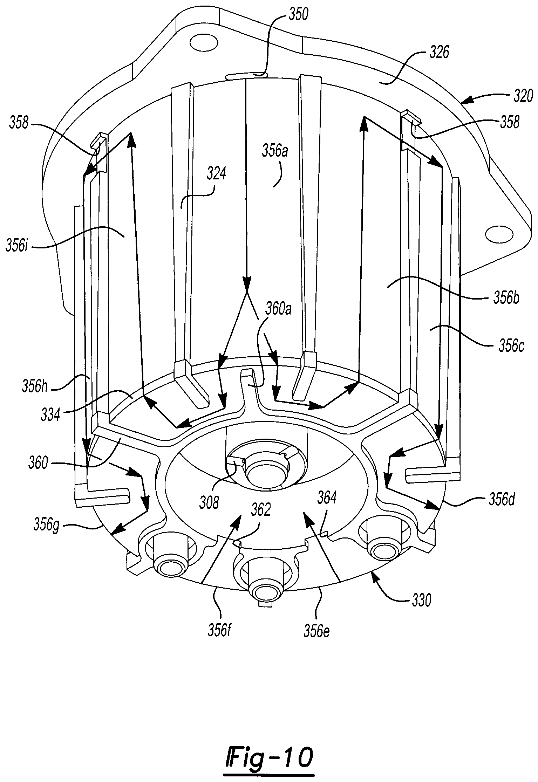

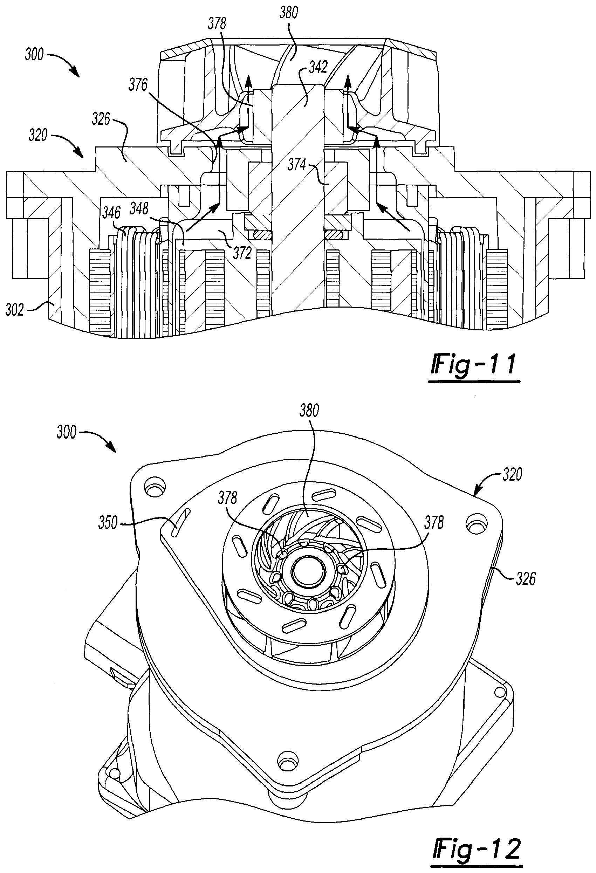

Figures 7-12 illustrate another alternate pump identified at reference numeral 300. Pump 300 incorporates many of the same features shown in relation to pump 10 and pump 200. A repetitive description of the substantially similar components and their functions will not be presented. Pump 300 includes an outer housing 302 having a partition wall 304 and an integrally formed bearing stanchion 306. A plurality of radially extending slots 308 allow fluid communication between a lower reservoir 310 and a bearing cavity 312. Outer housing 302 includes a cylindrical wall 314 having a substantially smooth inner surface 316.

An inner housing 320 includes a cylindrical portion 322 having radially outwardly extending ribs 324 as well as an integrally formed mid-plate 326. The ribs may alternatively be formed on outer housing 302. A sleeve 330 includes a cylindrical portion 332 and an integrally formed flange portion 334. Flange portion 334 closes an open end of cylindrically-shaped portion 322 of inner housing 320. A seal 340 is located at the joint interconnecting inner housing 320 and flange portion 334. Cylindrical portion 332 of sleeve 330 axially extends to engage partition wall 304 to at least partially define lower reservoir 310.

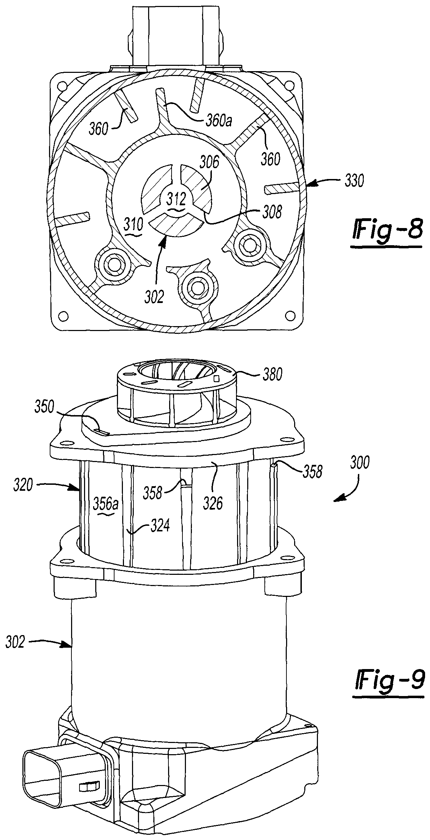

A rotor shaft 342 of pump is no longer hollow as described in relation to the previous arrangements. According to a key aspect of the invention, rotor shaft 342 is solid and fluid does not flow therethrough. Figures 9-12 depict a coolant flow path for pumped fluid to transmit heat from a stator 346, a rotor 348 and a controller 349 to the pumped fluid. Controller 349 is fixed to an increased thickness portion 351 of partition wall 304 to function as a heat sink. An inlet 350 extends through mid-plate 326 of inner housing 320. Ribs 324 of inner housing 320 cooperate with inner surface 316 of outer housing 302 to define a plurality of circumferentially spaced apart fluid passageways 356a, 356b, 356c, 356d, 356e, 356f, 356g, 356h, and 356i. Some ribs 324 include notches 358 to interconnect adjacent fluid passageways such as 356b and 356c. The notches 358 may be machined or cast into the ribs. A plurality of walls 360 are formed on flange portion 334 of sleeve 330 to cooperate with passageways 356 and define a circuitous flow path for pumped fluid to traverse and transfer heat from the electric motor and controller of pump 300 to an outlet of the pump.

More particularly, high pressure fluid is provided to inlet 350 through fluid passageway 356a and on either side of a wall 360a. Fluid continues to flow through passageways 356i and 356b around another set of ribs, down through passageways 356c and 356h, back up along passageways 356d and 356g, and returning through passageways 356f and 356e. Internal ports 362, 364 allow coolant to enter lower reservoir 310. Slots 308 allow coolant to enter bearing cavity 312. Coolant within cavity 312 may lubricate the interface between a bearing or bushing 370 and solid rotor shaft 342. The fluid flow path continues from lower reservoir 310 around rotor 248, inside of sleeve 330 until the fluid reaches a cavity 372. Fluid within cavity 372 may also lubricate the interface between a bearing or bushing 374 and solid rotor shaft 342. Coolant flows from cavity 372 through a plurality of passageways 376 extending through mid-plate 326 to provide a portion of the fluid path no longer provided through rotor shaft 342. A plurality of outlets 378 are circumferentially spaced apart from one another and extend through an impeller 380 to further define a portion of the coolant flow path. Outlets 378 terminate at a low pressure zone within impeller 380 such that increased temperature coolant is combined with the fluid being pumped from pump 300.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the disclosure. The scope of the invention is solely defined by the appended claims.

## Claims

1. An electric pump (300) comprising:
an outer housing (302) including a motor cavity and a controller cavity separated by a partition wall;
an inner housing (320) positioned within the motor cavity of the outer housing (302), one of the inner and outer housings (320, 302) including radially extending ribs (140a) positioned adjacent to the other of the inner and outer housings (320, 302) to define a portion of a coolant flow path (142) between the inner housing (320) and the outer housing (302), said portion of the coolant flow path (142) being partially defined by the partition wall, the inner housing (320) including a cylindrical portion (322) and a mid-plate (326) capping a first end of the cylindrical portion (322);
a pump member 200;
an electric motor positioned within the inner housing (320) and including a stator (346) and a rotor (348), the rotor (348) being fixed to a solid rotor shaft (342) for driving the pump member (200), the rotor shaft (342) extending through the mid-plate (326) and being rotatably supported by the mid-plate (326);
a cylindrical sleeve (330) separating the stator (346) and the rotor (348), an area between the sleeve (330) and the rotor (348) forming another portion of the coolant flow path (142) and interconnecting a volume between the inner and outer housings (320, 302) with a low pressure zone of an impeller cavity (46) containing the pump member (200), wherein the sleeve (330) includes a radially extending flange (334) capping an open second end of the cylindrical portion (322) of the inner housing (320); and
a controller (349) positioned within the controller cavity in heat transfer relation with the partition wall.

2. The electric pump (300) of claim 1, wherein the pump member (200) and the inner housing (320) each include an aperture in receipt of the fluid flowing between the rotor (348) and the sleeve (330) to complete the coolant flow path (142).

3. The electric pump (300) of claim 2, wherein the coolant flow path (142) includes substantially parallel portions where the flow is in an opposite direction.

4. The electric pump (300) of claim 3, wherein the parallel portions are circumferentially spaced apart and extend substantially parallel to an axis of rotor shaft rotation.

5. The electric pump (300) of claim 1, wherein one of the ribs (140a) axially extends along substantially the entire length of the inner housing (320) and an adjacent one of the ribs (140b) has a lesser length to allow fluid to pass across an end face of the adjacent rib.

6. The electric pump (300) of claim 1, wherein the stator (346) is positioned in a sealed cavity devoid of coolant.

7. The electric pump (300) of claim 6 further including wire apertures (124) extending through the sleeve flange (334) interconnecting the controller cavity and the sealed cavity.

8. The electric pump (300) of claim 1 wherein the sleeve flange (334) includes a wall defining a portion of the coolant flow path that extends transverse to the axis of rotor shaft rotation.

9. The electric pump (300) of claim 8, wherein the sleeve flange wall is interrupted by a port allowing coolant flow from the coolant flow path portion between the inner and outer housings to a location between the sleeve and the rotor.

10. The electric pump (300) of claim 1, wherein the coolant flow path branches into two channels flowing in parallel with each other and reconnects at a reservoir in fluid communication with the rotor (348).

11. The electric pump (300) of claim 1, wherein each of the outer housing (302), the inner housing (320), and the sleeve (330) each include substantially cylindrically shaped portions co-axially aligned along a rotor axis of rotation.

12. The electric pump (300) of claim 1, wherein a portion of the partition wall includes an increased thickness, the controller (349) being directly engaged with the increased thickness portion.

13. The electric pump (300) of claim 1, wherein the outer housing (302) includes a boss in receipt of a rotor shaft bushing.

## Patentansprüche

1. Elektrische Pumpe (300), die Folgendes umfasst:
ein äußeres Gehäuse (302), das einen Motorhohlraum und einen Steuerungshohlraum einschließt, die durch eine Trennwand getrennt sind;
ein inneres Gehäuse (320), das innerhalb des Motorhohlraums des äußeren Gehäuses (302) angeordnet ist, wobei das eine von dem inneren und dem äußeren Gehäuse (320, 302) sich in Radialrichtung erstreckende Rippen (140a) einschließt, die angrenzend an das andere von dem inneren und dem äußeren Gehäuse (320, 302) angeordnet sind, um einen Abschnitt einer Kühlmittel-Strömungsbahn (142) zwischen dem inneren Gehäuse (320) und dem äußeren Gehäuse (302) zu bilden, wobei der Abschnitt der Kühlmittel-Strömungsbahn (142) teilweise durch die Trennwand definiert wird,
wobei das innere Gehäuse (320) einen zylindrischen Abschnitt (322) und eine Mittelplatte (326), die ein erstes Ende des zylindrischen Abschnitts (322) abdeckt, einschließt;
ein Pumpenelement (200);
einen Elektromotor, der innerhalb des inneren Gehäuses (320) angeordnet ist und einen Stator (346) und einen Rotor (348) einschließt, wobei der Rotor (348) an einer massiven Rotorwelle (342) zum Antreiben des Pumpenelements (200) befestigt ist, wobei sich die Rotorwelle (342) durch die Mittelplatte (326) erstreckt und drehbar durch die Mittelplatte (326) getragen wird;
eine zylindrische Hülse (330), die den Stator (346) und den Rotor (348) trennt, wobei ein Bereich zwischen der Hülse (330) und dem Rotor (348) einen anderen Abschnitt der Kühlmittel-Strömungsbahn (142) bildet und ein Volumen zwischen dem inneren und dem äußeren Gehäuse (320, 302) mit einer Niederdruckzone eines Laufradhohlraums (46) verbindet, der das Pumpenelement (200) enthält, wobei die Hülse (330) einen sich in Radialrichtung erstreckenden Flansch (334) einschließt, der ein offenes zweites Ende des zylindrischen Abschnitts (322) des inneren Gehäuses (320) abdeckt; und
eine Steuerung (349), die innerhalb des Steuerungshohlraums in Wärmeübertragungsbeziehung mit der Trennwand angeordnet ist.

2. Elektrische Pumpe (300) nach Anspruch 1, wobei das Pumpenelement (200) und das innere Gehäuse (320) jeweils eine Öffnung zur Aufnahme des Fluids, das zwischen dem Rotor (348) und der Hülse (330) strömt, einschließen, um die Kühlmittel-Strömungsbahn (142) zu vervollständigen.

3. Elektrische Pumpe (300) nach Anspruch 2, wobei die Kühlmittel-Strömungsbahn (142) im Wesentlichen parallele Abschnitte einschließt, wo die Strömung in einer entgegengesetzten Richtung erfolgt.

4. Elektrische Pumpe (300) nach Anspruch 3, wobei die parallelen Abschnitte in Umfangsrichtung voneinander beabstandet sind und sich im Wesentlichen parallel zu einer Achse einer Rotorwellendrehung erstrecken.

5. Elektrische Pumpe (300) nach Anspruch 1, wobei sich eine der Rippen (140a) in Axialrichtung entlang im Wesentlichen der gesamten Länge des inneren Gehäuses (320) erstreckt und eine benachbarte der Rippen (140b) eine geringere Länge aufweist, um zu ermöglichen, dass Fluid über eine Stirnfläche der benachbarten Rippe hinweggeht.

6. Elektrische Pumpe (300) nach Anspruch 1, wobei der Stator (346) in einem abgedichteten Hohlraum frei von Kühlmittel angeordnet ist.

7. Elektrische Pumpe (300) nach Anspruch 6, die ferner Drahtöffnungen (124) einschließt, die sich durch den Hülsenflansch (334) erstrecken, wobei die den Steuerungshohlraum und den abgedichteten Hohlraum miteinander verbinden.

8. Elektrische Pumpe (300) nach Anspruch 1, wobei der Hülsenflansch (334) eine Wand einschließt, die einen Abschnitt der Kühlmittel-Strömungsbahn definiert, der sich quer zu der Achse der Rotorwellendrehung erstreckt.

9. Elektrische Pumpe (300) nach Anspruch 8, wobei die Hülsenflanschwand durch eine Öffnung unterbrochen ist, die einen Kühlmittelstrom von dem Kühlmittel-Strömungsbahnabschnitt zwischen dem inneren und dem äußeren Gehäuse zu einer Position zwischen der Hülse und dem Rotor ermöglicht.

10. Elektrische Pumpe (300) nach Anspruch 1, wobei sich die Kühlmittel-Strömungsbahn in zwei Kanäle verzweigt, die parallel zueinander strömen, und sich an einem Reservoir in Fluidverbindung mit dem Rotor (348) wieder verbindet.

11. Elektrische Pumpe (300) nach Anspruch 1, wobei sowohl das äußere Gehäuse (302), das innere Gehäuse (320) als auch die Hülse (330) jeweils im Wesentlichen zylindrisch geformte Abschnitte einschließen, die koaxial entlang einer Rotor-Drehungsachse ausgerichtet sind.

12. Elektrische Pumpe (300) nach Anspruch 1, wobei ein Abschnitt der Trennwand eine gesteigerte Dicke aufweist, wobei die Steuerung (349) unmittelbar mit dem Abschnitt gesteigerter Dicke in Eingriff gebracht ist.

13. Elektrische Pumpe (300) nach Anspruch 1, wobei das äußere Gehäuse (302) einen Vorsprung zum Aufnehmen einer Rotorwellenbuchse einschließt.

## Revendications

1. Pompe électrique (300) comprenant :
un boîtier extérieur (302) incluant une cavité de moteur et une cavité d'organe de commande séparée par une cloison ;
un boîtier intérieur (320) positionné dans la cavité de moteur du boîtier extérieur (302), l'un des boîtiers intérieur et extérieur (320, 302) incluant des nervures s'étendant radialement (140a) positionnées de manière à être adjacentes à l'autre des boîtiers intérieur et extérieur (320, 302) pour définir une section d'un passage d'écoulement de refroidisseur (142) entre le boîtier intérieur (320) et le boîtier extérieur (302), ladite section du passage d'écoulement de refroidisseur (142) étant partiellement définie par la cloison, le boîtier intérieur (320) incluant une section cylindrique (322) et une plaque centrale (326) chapeautant une première extrémité de la section cylindrique (322) ;
un élément pompe (200) ;
un moteur électrique positionné dans le boîtier intérieur (320) et incluant un stator (346) et un rotor (348), le rotor (348) étant fixé à un arbre de rotor solide (342) pour entraîner l'élément pompe (200), l'arbre de rotor (342) s'étendant à travers la plaque centrale (326) et étant supporté de manière à pouvoir tourner par la plaque centrale (326) ;
un manchon cylindrique (330) séparant le stator (346) et le rotor (348), une zone entre le manchon (330) et le rotor (348) formant une autre section du passage d'écoulement de refroidisseur (142) et interconnectant un volume entre les boîtiers intérieur et extérieur (320, 302) avec une zone à basse pression d'une cavité de turbine (46) contenant l'élément pompe (200), le manchon (330) incluant une bride s'étendant radialement (334) chapeautant une seconde extrémité ouverte de la section cylindrique (322) du boîtier intérieur (320) ; et un organe de commande (349) positionné dans la cavité d'organe de commande et en relation de transfert thermique avec la cloison.

2. Pompe électrique (300) selon la revendication 1, dans laquelle l'élément pompe (200) et le boîtier intérieur (320) incluent chacun une ouverture à réception du fluide s'écoulant entre le rotor (348) et le manchon (330) pour terminer le parcours d'écoulement de refroidisseur (142).

3. Pompe électrique (300) selon la revendication 2, dans laquelle le parcours d'écoulement de refroidisseur (142) inclut des sections substantiellement parallèles où l'écoulement se fait dans un sens opposé.

4. Pompe électrique (300) selon la revendication 3, dans laquelle les sections parallèles sont espacées circonférentiellement et s'étendent substantiellement parallèlement à un axe de rotation de l'arbre de rotor.

5. Pompe électrique (300) selon la revendication 1, dans laquelle une des nervures (140a) s'étendant axialement sur substantiellement toute la longueur du boîtier intérieur (320) et une nervure adjacente parmi les nervures (140b) a une longueur plus courte pour permettre à du fluide de passer à travers une face terminale de la nervure adjacente.

6. Pompe électrique (300) selon la revendication 1, dans laquelle le stator (346) est positionné dans une cavité scellée dépourvue de refroidisseur.

7. Pompe électrique (300) selon la revendication 6, comprenant en outre des ouvertures à fils (124) s'étendant à travers la bride de manchon (334) interconnectant la cavité d'organe de commande et la cavité scellée.

8. Pompe électrique (300) selon la revendication 1, dans laquelle la bride de manchon (334) inclut une paroi définissant une section du parcours d'écoulement de refroidisseur qui s'étend transversalement à l'axe de rotation de l'arbre de rotor.

9. Pompe électrique (300) selon la revendication 8, dans laquelle la paroi de bride de manchon est interrompue par un port permettant un écoulement de refroidisseur depuis la section de parcours d'écoulement de refroidisseur entre les boîtiers intérieur et extérieur jusqu'à un emplacement entre le manchon et le rotor.

10. Pompe électrique (300) selon la revendication 1, dans laquelle le parcours d'écoulement de refroidisseur se ramifie en deux canaux orientés parallèlement l'un à l'autre et se reconnecte au niveau d'un réservoir communication fluidique avec le rotor (348).

11. Pompe électrique (300) selon la revendication 1, dans laquelle chacun des boîtiers extérieur (302), boîtier intérieur (320), et manchon (330) inclut des sections substantiellement de forme cylindrique alignées coaxialement le long d'un axe de rotation du rotor.

12. Pompe électrique (300) selon la revendication 1, dans laquelle une section de la cloison comporte une épaisseur accrue, l'organe de commande (349) étant directement engagé dans la section d'épaisseur accrue.

13. Pompe électrique (300) selon la revendication 1, dans laquelle le boîtier extérieur (302) comporte une bosse à réception d'une bague d'arbre de rotor.
